# EUROPEAN PATENT SPECIFICATION

(11) **EP 0 679 577 B1**
(45) Date of publication and mention of the grant of the patent: **07.04.1999**
(21) Application number: 95900288.2
(22) Date of filing: 10.11.1994
(51) Int. Cl.: B65B 31/00, B65G 69/20

(54) **METHOD OF AND DEVICE FOR PACKING ARTICLE BY MEANS OF ATHMOSPHERIC PRESSURE**
VERFAHREN UND VORRICHTUNG ZUM VERPACKEN EINES GEGENSTANDES MITTELS ATMOSPHÄRENDRUCKS
PROCEDE ET DISPOSITIF POUR EMBALLER UN ARTICLE PAR LA PRESSION ATMOSPHERIQUE

(30) Priority: 12.11.1993 JP 282917/93; 02.03.1994 JP 31728/94; 23.08.1994 JP 198099/94
(43) Date of publication of application: 02.11.1995
(73) Proprietor: Shinwa Corporation, Kobe-shi, Hyogo 658 (JP)
(72) Inventor: MITSUTA, Teruo, Shinwa Corporation 2-18-6, Imai, Chiba 260 (JP)
(74) Representative: Eder, Thomas, Dr.-Ing.
(86) International application number: PCT/JP94/01908
(87) International publication number: WO 95/13218

(56) References cited:
- FR-A- 2 406 567
- JP-A-60 002 465
- JP-A-61 273 319
- JP-A-62 028 359
- JP-U-54 041 872
- JP-U-60 106 953

## Description

### TECHNICAL FIELD

This Invention relates to a method for reliable transport packaging of an article utilizing atmospheric pressure, and a packaging device.

### BACKGROUND OF THE INVENTION

Various kinds of methods or devices are known by which a variety of articles are reliably packaged and transported. Since it is difficult for a large-sized article to be packaged, a packaging vessel such as a container is used in which panel members of a steel plate or wooden material are combined to form a box-like configuration.

With such a packaging container, it is unnecessary for an article to be packed. Depending upon a particular article, very troublesome packing procedure is conventionally required, in order to avoid the article from rusting or damaging. A large-sized, rusty article, such as sheet material or coiled material for the purpose of press working, is securely packaged in Its entirety by a packaging paper having rust-proofing and moisture-proofing properties, so as not to be exposed to the exterior, in order to avoid it becoming rusty and damaged. The portion of the article tending to be easily damaged due to external impact is covered with a protective pad. The thus formed package is bound by a binding band in its entirety and contained in a package container for transpiration purpose. In order to transport a large-sized panel member, such as a door panel or a fender panel of an automobile, a plurality of such panels are arranged in a packaging container in a vertical orientation and spaced apart relationship, in order to avoid them from being damaged. The panels are fixed by an appropriate means so as to avoid them from falling down to be contacted relative to one another.

In the case of a metal article, it is necessary to provide various countermeasures, in order to avoid it from becoming rusty and/or to avoid it from being damaged during transportation. Thus, it is very time-consuming to conduct packaging operation or depackaging operation. It also requires well-trained operator. A large quantity of packing material is also required, so that an increased amount of packing material is produced after depackaging, which is very problematic. It also requires a large-scale, heavy weight packaging container which is troublesome in view of handling.

A de-constructive packaging container is known. The de-constructive packaging container is so configured that it may be broken into parts after storage or depackaging in a compact form. It is still massive and heavy even after it is deconstructed.

Further prior art is a device for reliable transport packaging of an article utilizing atmospheric pressure, with a base table and a perforated plate under the base table (FR-A-2406567).

### SUMMARY OF THE INVENTION

Accordingly, it is an object of the invention to provide a reliable transport packaging device and method which permit very easy packaging operation and depackaging operation, and which provide superior rust-proofing ability and fixation ability relative to an article to be packaged.

The invention provides a method and device for packaging an article utilizing atmospheric pressure as defined in the independent method claim.

It is sufficient for the base table to have a peripheral wall of a size sufficient to enable the article to be mounted thereon and to enable the peripheral edge of the packaging sheet to be sealingly engage therewith. The base table may be of a flat plate having an appropriate thickness, a bottom wall of a reduced thickness having a peripheral wall upstanding from the bottom wall, or a hollow, box-like configuration.

The packaging sheet is formed from a resilient sheet material having air-tightness and flexibility for enabling the packaging sheet to be flexed along the contour of the article during evacuation process. The packaging sheet is formed from a sheet material having a uniform thickness in its entirety, or a sheet material having a peripheral edge of an increased thickness. The packaging sheet has a size and configuration enabling the base table and the article thereon to be covered therewith. It is also possible for the packaging sheet to have a separable construction by which portions of the packaging sheet may be separated or bonded together. In this case, the portions of the packaging sheet may be sealingly bonded together by means of bonding means.

The packaging sheet and the base table may be configured so that the peripheral edge of the packaging sheet is sealingly placed over the base table. Alternatively, it is possible to provide a band at the outer periphery of the packaging sheet, so that the peripheral edge may be urged against the base table in an airtight manner. In another embodiment, the peripheral edge of the packaging sheet may be bonded directly to the base table by means of adhesive means. It is also possible for the packaging sheet to be sealingly engaged with another sealable seat, so that it is engaged with the base table in an airtight manner during evacuation process.

The vacuum connection means serves to connect the space around the article enclosed by the packaging sheet and the base table to a vacuum source. The vacuum connection means includes a connection pipe provided with a gate valve. The connection pipe is attached to the base table or the packaging sheet. The connection pipe is connected with the vacuum source during packaging operation. By this, the space within the packaging sheet is evacuated to a decreased pressure. The connection pipe also serves to introduce a quantity of air into the space within the packaging sheet during depackaging process.

In accordance with the invention, it is possible to package an article in a quite simple manner wherein an article is placed on the base table, the packaging sheet is put over the article, the peripheral edge of the packaging sheet is sealingly engaged with the peripheral wall of the base table, and the space within the packaging sheet is evacuated by means of the vacuum connection means. The article may be prevented from rusting, since the air in the space within the packaging sheet has been removed.

When the space within the packaging sheet is evacuated, the atmospheric pressure outside the package is acted uniformly on the packaging sheet, so that the entire article is urged against the base table by means of the uniform pressure and fixed thereon. Accordingly, the article, no matter whether it is consisted of a single part or a plurality of individual parts, may be securely fixed on the base table, without the use of any additional means, such as binding band or tape.

### BRIEF DESCRIPTION OF THE DRAWINGS

Fig. 1 is a perspective view of a packaging device according to one embodiment of the invention;
Fig. 2 is a perspective view of the packaging device of Fig. 1 upon actuation;
Fig. 3 is an elevational view, in section, of the packaging device of Fig. 1;
Fig. 4 is an elevational view, in section, of a packaging device according to another embodiment of the invention;
Fig. 5 is a perspective view of a base table of the packaging device shown in Fig. 4;
Fig. 6 is a cross-sectional view illustrating a condition in which tightening device is attached;
Fig. 7 is a perspective view of a base table according to another embodiment of the invention;
Fig. 8 is a cross-sectional view of the packaging device of Fig. 7;
Fig. 9 is a cross-sectional view illustrating a condition in which tightening device is attached;
Fig. 10 is a cross-sectional view illustrating another condition in which tightening device is attached;
Fig. 11 is a perspective view of a packaging device according to another embodiment;
Fig. 12 is an exploded perspective view of the packaging device of Fig. 11;
Fig. 13 is a part cross-sectional view of the packaging device of Fig. 11;
Fig. 14 is a part cross-sectional view of a modified embodiment of the packaging sheet and the base table;
Fig. 15 is a cross-sectional view illustrating another attachment condition of the packaging sheet;
Fig. 16 is a cross-sectional further attachment condition of the packaging sheet;
Fig. 17 is a perspective view of the packaging sheet according to further embodiment;
Fig. 18 is a cross-sectional view illustrating how the packaging sheet of Fig. 17 is attached;
Fig. 19 is a perspective view illustrating one example of a fastener;
Fig. 20 is a perspective view illustrating a separable packaging sheet;
Fig. 21 is a perspective view illustrating a separable packaging sheet according to another embodiment;
Fig. 22 is a cross-sectional view illustrating another separable packaging sheet;
Fig. 23 is a cross-sectional view illustrating further separable packaging sheet;
Fig. 24 is a perspective view illustrating a base table of a packaging device according to a further embodiment of the invention;
Fig. 25 is an elevational view, in section, of the packaging device of Fig. 24 in which a plurality of panel members are packaged;
Fig. 26 is a perspective view of a truck according to the invention;
Fig. 27 is an enlarged, sectional view of an airtight engagement portion;
Fig. 28(A) is a side elevational view of the truck,
Fig. 28(B) is a perspective view of a rail road freight car;
Fig. 28(C) is a side elevational view of the rail road freight car;
Fig. 29(A) is a side elevational view of a container car;
Fig. 29(B) is a perspective view of an open freight car;
Fig. 30(A) is a perspective view illustrating a load carrying surface of transportation means;
Fig. 30(B) is a side elevational view showing a method in which an opening of a packaging sheet is securely closed;
Fig. 30(C) is a side elevational view showing another method in which an opening of the packaging sheet is securely closed; and
Figs. 31(A) and 31(B) are side elevational views of a load carrying surface illustrating a further method in which an opening of a packaging sheet is securely closed.

### BEST MODE FOR CARRYING OUT THE INVENTION

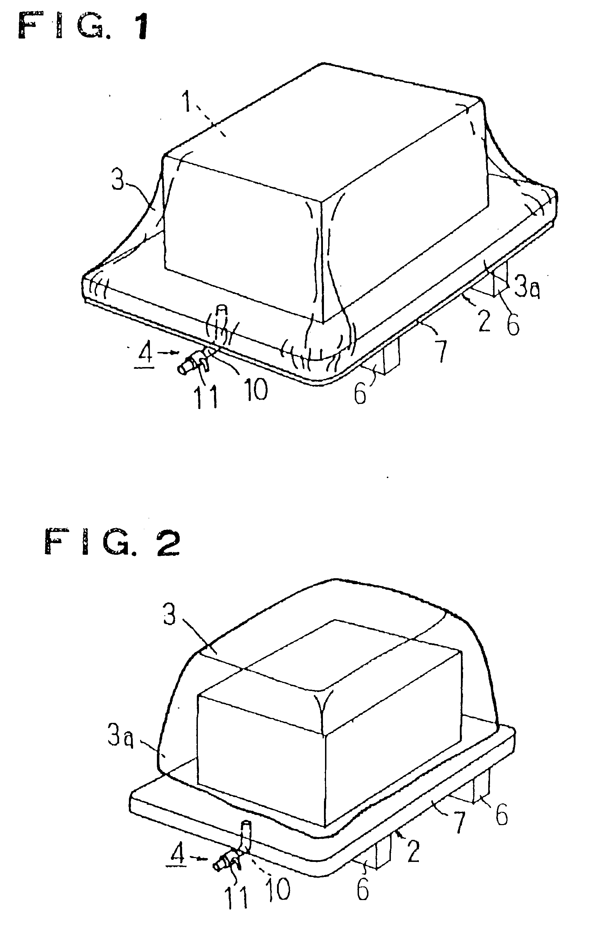

Several embodiments of the invention will be explained in detail below with reference to Figs. 1 through 25.

A packaging device utilizing atmospheric pressure comprises, as shown in Figs. 1 through 3, a base table 2 on which an article 1 is mounted, a packaging sheet 3 for covering the article 1, and connection means 4 in communication with a vacuum source for reducing the pressure within a space enclosed by the packaging sheet 3 and the base table 2, so as to maintain a reduced pressure within the space.

The base table 2 may be made from a flat plate of a material, such as, metals, woods, or synthetic resins. The flat plate should have a surface substantially larger than that of the article 1, and a mechanical strength sufficient to withstand a load or weight of the article 1. The base table 2 has a thickness for enabling the peripheral edge 3a of the packaging sheet 3 to be closely adhered thereon. The base table 2 defines, in a portion thereof, an attachment bore 5 to which the vacuum connection means 4 is to be attached. The base table 2 is provided with legs 6 attached to the lower surface thereof, in order to maintain a space into which a fork of a fork lift may be inserted during transportation, and a space in which the vacuum connection means 4 is disposed.

The packaging sheet 3 is formed from a sheet material having an air-tightness and suitable elasticity. In actual, the packaging sheet is formed from a plastic sheet such as a vinyl sheet, a rubber sheet, or a fabric sheet lined with a rubber layer or coated with plastic material. The packaging sheet 3 is of a uniform thickness in its entirety. In this connection, it is noted that, since the packaging sheet does not require a high strength, it may have a thinner thickness, provided that it is capable of withstanding a certain degree of tension and of maintaining air-tightness during evacuation or vacuum operation. The packaging sheet 3, being formed from the above sheet material, is formed into a substantially sack-like configuration one side of which is opened so as to define an opening. The peripheral edge 3a around the opening of the packaging material having been formed into a sack-like configuration has a peripheral length shorter than that of the peripheral wall 7 of the base table 2. Thus, the packaging material of a sack-like configuration is mounted to the peripheral wall 7 of the base table, with the peripheral edge 3a being slightly extended.

The vacuum connection means 4 includes a connection pipe 10. One end of the connection pipe 10 is inserted in the attachment bore 5 of the base table 2 and opened at the upper surface of the base table 2. The other end of the connection pipe 10 is removably connected to a vacuum pump 12. The vacuum connection means also includes a gate valve 11 disposed between the opposite ends of the connection pipe.

In operation, the article 1 is placed onto the base table 2. Then, the packaging sheet 3 is put on the article 1. The peripheral edge 3a of the packaging sheet 3 is tightly placed around the peripheral wall 7 of the base table 2. Thereafter, the gate valve 11 is opened, and then the vacuum pump 12 is actuated. By this, a quantity of air contained within a space defined by the base plate 2 and the packaging sheet 3 is evacuated, so that the pressure within the space is reduced to a pressure below the atmospheric pressure. Thus, the entire packaging sheet 3 is uniformly urged against the article 1 due to the pressure difference across the packaging sheet 3. Accordingly, the article 1 is urged, through the packaging sheet 3, against the upper surface of the base table 2, so as to be fixed thereon. After this fixation of the article, the gate valve 11 is closed, so as to maintain the space within the packaging sheet 3 at an evacuated condition or a reduced pressure. Then, the connection pipe 10 is disconnected from the vacuum pump 12, whereby the packaging operation is completed.

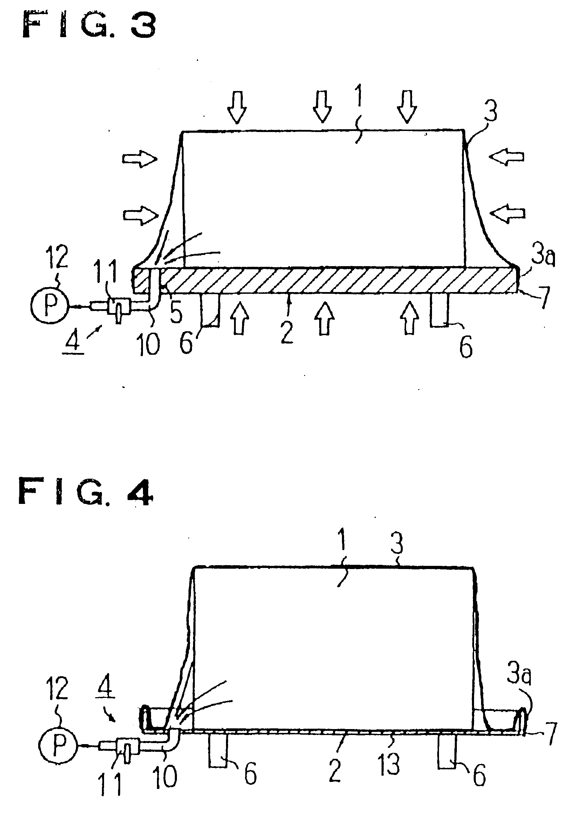

The atmospheric pressure, to be acted on the article 1 due to the evacuated condition within the packaging sheet 3, is evenly or uniformly applied to the article 1 in every direction, as shown by the arrow marks in Fig. 3. The laterally opposed components of the atmospheric pressure are acted on relative one another, so as to be counterbalanced. The vertically opposed components of the atmospheric pressure are acted on the article 1 and the base table 2, respectively, in opposite directions. Thus, the article 1 is urged against the base table 2 so as to be fixed thereon, whereby any lateral displacement or shift of the article is prevented.

When the space within the packaging sheet 3 is completely evacuated, a pressure of 1 kgf/ square cm may applied to the packaged article. Thus, the article may be securely fixed even when it is of a heavier weight. In this connection, it is unnecessary for the space within the packaging sheet 3 to be completely evacuated upon packaging. Rather, the degree of vacuum may be adjustably selected, so as to obtain a pressure sufficient to fix the article. Particularly when the article has a lesser strength, the degree of vacuum should be selected accordingly. In such a case, a pressure gauge or vacuum gauge (not shown) is connected to the connection pipe 10, so as to enable one to adjustably select an appropriate degree of vacuum.

When the packaging operation has been completed, the article 1, together with the base table 2, is carried on a suitable vehicle, such as a truck, for the purpose of transportation. During transportation, the article 1, together with the base table 2, may be transported in a horizontal state or orientation in which the base table 2 is disposed downside. Alternatively, the article 1, together with the base table 2, may be transported in a vertical state or orientation in which the base table 2 is disposed vertically. Furthermore, the article 1, together with the base table 2, may be transported in a suspended manner or state in which the base table 2 is disposed upside in a substantially horizontal orientation. In any way, the article may be transported in a position in which it is most stable, or in a position by which it is most efficiently accommodated in a restricted space, such as the carrier of a truck.

In order to de-package the article 1, the gate valve 11 in the connection pipe 10 is simply opened. By this, atmospheric air is withdrawn through the connection pipe 10 into the space within the packaging sheet 3. Thus, the pressure in the space within the packaging sheet 3 is returned to the atmospheric pressure, whereby the article 1 will be released. Then, the packaging sheet 3 is removed from the base table 2 and the article 1. After the depacking, the packaging sheet 3 is folded and placed on the base table 2.

It is possible for the connection pipe 10 to be mounted directly on the packaging sheet 3, rather than on the base table 2. In this case, the connection pipe 10 is provided at a portion of the packaging sheet 3 which is not in contact with the base table 2 and the article 1.

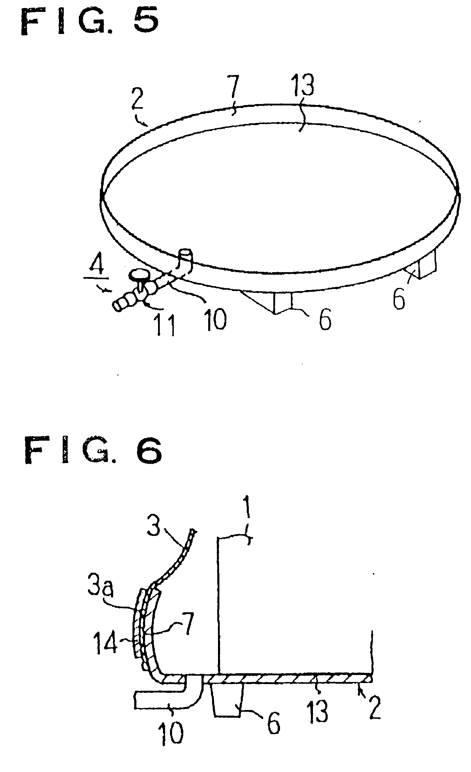

The base table 2 may be formed from a material of a plate-like member having a reduced thickness, as shown in Figs. 4 and 5. In this case, the base table 2 includes a bottom wall 13 and a peripheral wall 7 provided in the periphery of the bottom wall 13, the bottom wall 13 and the peripheral wall 7 being integrally formed in one piece. The base table 2 may be formed into a circular configuration as shown in Fig. 5, instead of rectangular configuration. The base table may be also formed into an elliptic configuration. In this manner, an increased air-tightness may be obtained as between the peripheral wall of the base table 2 and the packaging sheet 3.

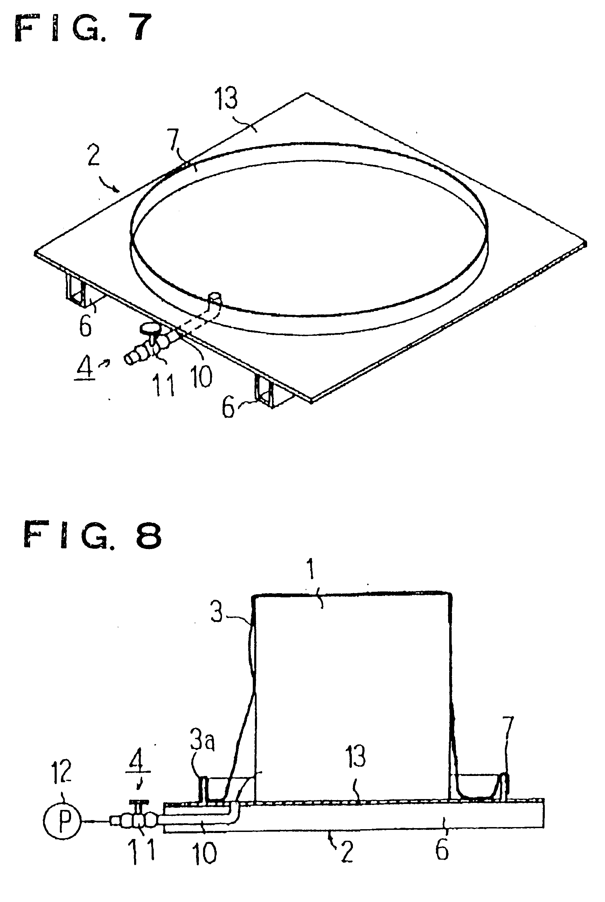

It is also possible to provide an upstanding, peripheral wall 7 in the upper surface of the bottom wall 13 of a reduced thickness, as shown in Figs. 7 and 8. In this case, the bottom wall 13 may be formed into a rectangular configuration for the purpose of portability, and the peripheral wall 7 may be formed into a circular configuration, as shown in the drawing.

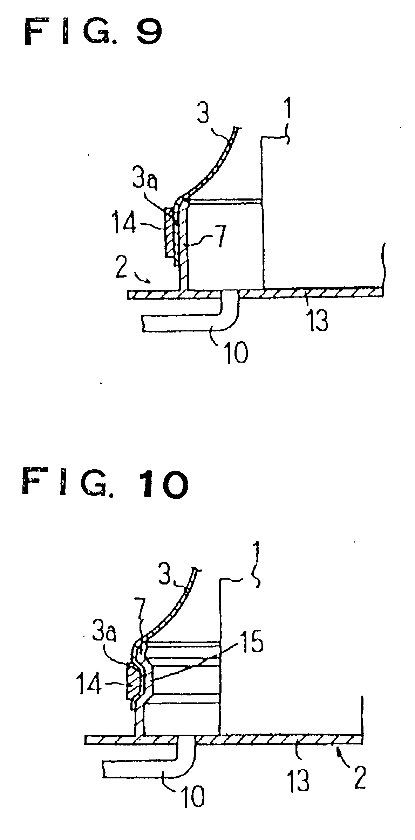

In order to increase air-tightness between the packaging sheet 3 and the peripheral wall 7, the outer periphery of the peripheral edge of the packaging sheet 3 may be tightened by a tightening means 14, as shown in Figs. 6 and 9. Although it is preferable that the tightening means 14 be formed, for example, from a strong band of a elastic and extendible rubber, it may be formed form a metal band. The band 14 is formed into a configuration of an endless belt. For example, the band 14 is first fitted around the peripheral wall 7 of the base table 2 at a position below the groove 15. Then, the peripheral edge 3a of the sheet is placed over the groove 15. Thereafter, the tightening band is placed into the groove 15.

As illustrated in Fig. 10, it is possible to form a groove 15 in the peripheral wall 7, so that a band 14 adapted to be fitted in the groove 15 is placed around the periphery of the packaging sheet 3. In this case, the band 14 has a configuration complementary to the that of the groove 15 formed in the peripheral wall, i. e., the band 14 has a substantially trapezoidal cross-section. The configuration of the groove 15 or the band 14 is not limited to the above trapezoidal configuration. The groove 15 and the band 14 may take various configurations, such as arcuate, V-shaped, U-shaped or other suitable configuration, which may maintain air-tightness of the base table 2 along the periphery of the sheet relative to the peripheral wall 7.

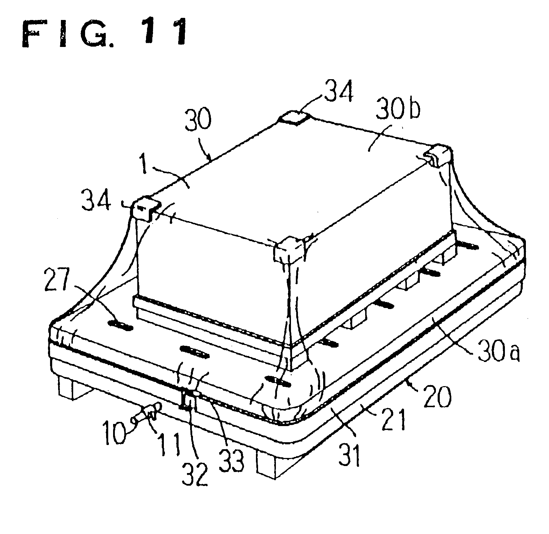

Figs. 11 through 13 show another embodiment. The base table 20 in this embodiment includes four peripheral walls 21, and bottom wall 22 and upper wall 23 respectively connected to the lower edges and the upper edges of the peripheral walls 21. Each peripheral wall 21 is formed with a groove 24 extending along the entire circumferential length of the peripheral walls. The groove is provided with several adhesion ports 25 at appropriate positions. The adhesion ports 25 are in communication with the inside of the base table. An attachment hole 26, to which the connection pipe 10 is attached, is formed in an appropriate portion of the peripheral wall 21 of the base table 20. The bottom wall 22 of the base table 20 is formed from a rigid plate having no apertures therein. The bottom wall 22 merges into the peripheral wall 21. The upper wall 23 is formed with plural suction ports 28, so as to constitute a load carry surface.

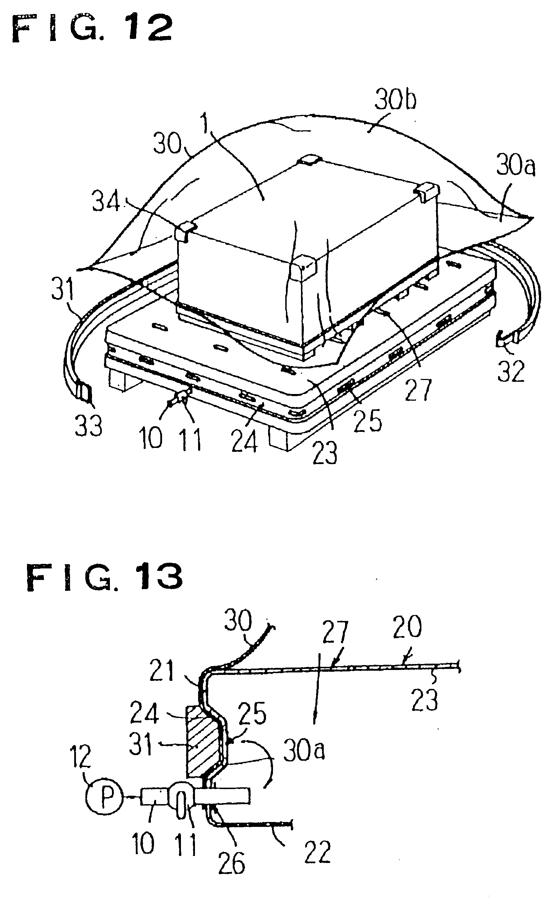

A packaging sheet 30 is of a substantially rectangular, flat configuration having four peripheral edges. The packaging sheet 30 has a substantially uniform thickness in the area from the central portion 30b to the peripheral edge 30a. Each peripheral edge 30a is urged against the outer surfaces of the peripheral walls 21 of the base table 20. The peripheral edges are then tightened inwardly by means of tightening means such as a band 31, so as to be sealingly engaged with the peripheral wall 21 of the base table 20. As shown in Fig. 13, the band 31 also has a configuration complementary to that of the groove 24 formed in the peripheral wall 21, i. e., the band is of a substantially trapezoidal cross-section. The configuration of the groove 24 or the band 31 should not be limited to the above trapezoidal cross-section. They make take various configurations, such as V-shaped cross-section, U-shaped cross-section or the like, which may maintain air-tightness between the peripheral edge of the sheet and the peripheral wall 21 of the base table 20.

The band 31 may include a buckle consisting of a male member 32 and a female member 33 provided at opposite ends of the band. The band is stretched and wound around the peripheral edge 30a of the packaging sheet 30, having been sealingly adhered to the peripheral wall 21 of the base table 20. Then, the male member 32 and the female member 33 of the buckle are engaged with each other, so that the belt is fixed around the packaging sheet. Alternatively, an endless band may be used.

When depackaging the article 1, the gate valve 11 of the connection pipe 10 is opened, so as to actuate the vacuum pump 12. By this, the peripheral edge 30a of the packaging sheet 30 is adhered onto and sealingly engaged with the peripheral wall 21 through the suction ports 25 formed in the peripheral wall 21 of the base table 20. The space defined between the base table 20 and the packaging sheet 30 is also evacuated through the suction ports 28 formed in the upper wall 23 of the base table 20. By this, the pressure within the above space is reduced to a pressure below the atmospheric pressure, so that the article 1 is fixed to the base table 20 by the action of the atmospheric pressure. When the article 1 has any sharp corners of an edge like configuration, it is preferable that such corners of the article 1 be provided with a corner pad 34, as shown in Fig. 11.

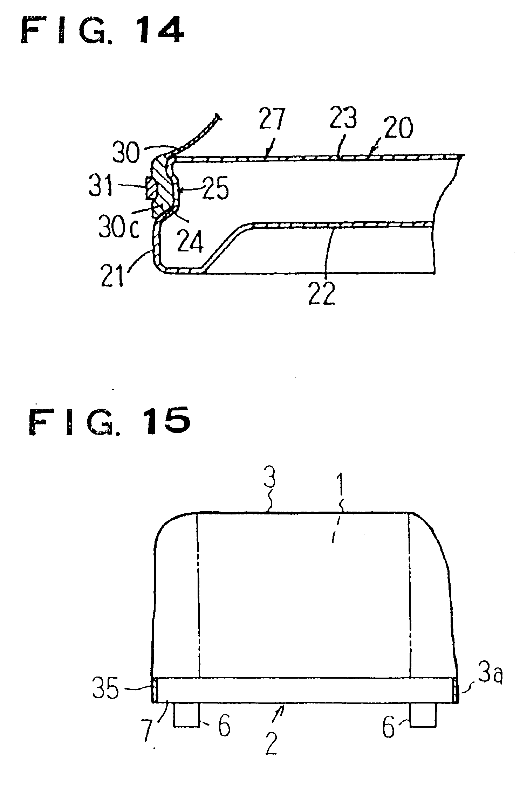

A packaging sheet 30 according to a modified embodiment is shown in Fig. 14. The packaging sheet 30 includes a peripheral edge 30c of an increased thickness. The edge 30c of an increased thickness has a cross-section complementary to that of the groove 24 of the peripheral wall 21 with which the edge 30c is to be engaged.

The peripheral edge 3a of the packaging sheet 3 may be adhered to the peripheral wall 7 of the base table 2 by means of an appropriate adhesive means, such as a length of double-sided adhesive tape 35, as shown in Fig. 15.

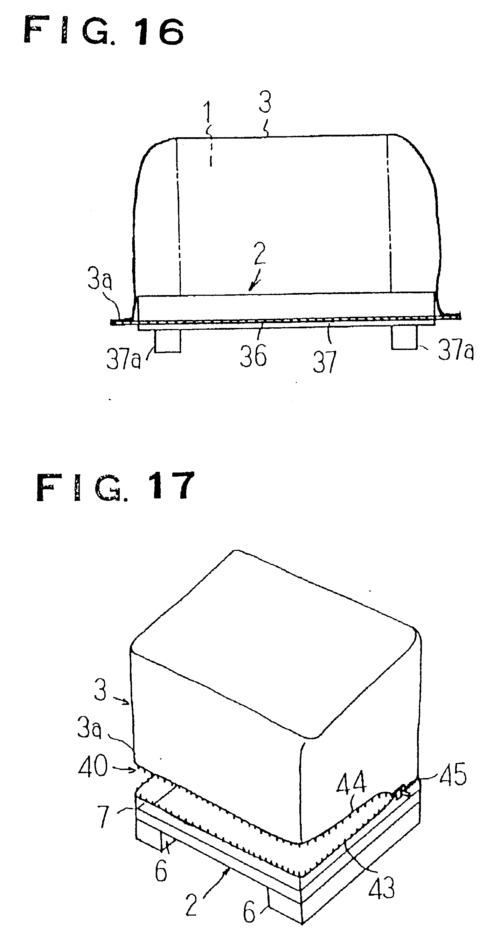

Alternatively, a sealing sheet 36 may be attached to the underside of the base table 2 which has no legs 6, as shown in Fig. 16. In this case, a presser plate 37 having legs 37a is attached to the lower surface of the sealing sheet, so as to secure the sealing sheet 36 in place between the base table 2 and the presser plate 37. Then, the peripheral edge 3a of the packaging sheet 3 wrapped around the article 1 is sealingly adhered to the sealing sheet 36 by means of heat seal. It is noted, however, that, although the embodiments shown in Figs. 15 and 16 present very high air-tightness or air-tightness, it is necessary for the packaging sheet 3 to be broken upon depackaging. Thus, such embodiments are effective in an application where the packaging sheet 3 is not intended to be recycled. The embodiments are also effective in a case where the base table 2 is formed from a material of a reduced air-tightness or where the base table 2 itself is of a construction having no air-tightness.

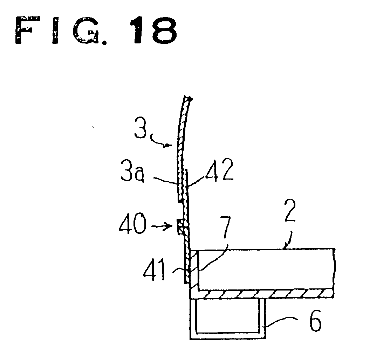

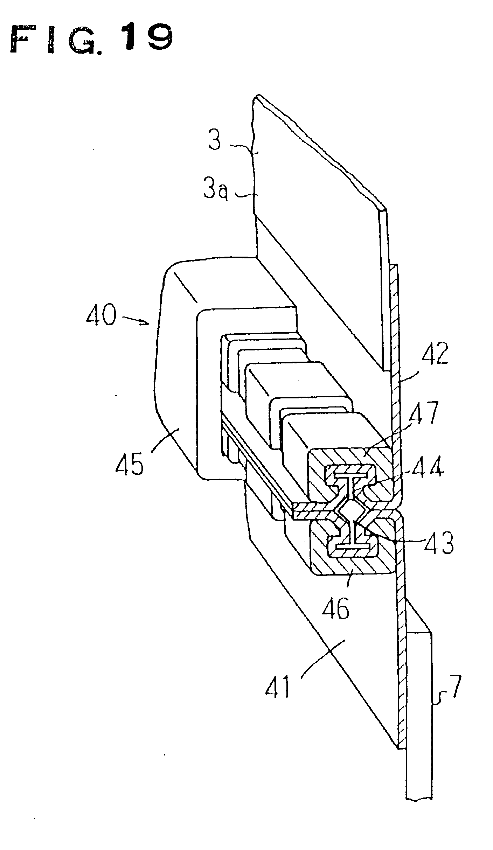

The packaging sheet 3 may be attached to the base table 2 in a separable manner by means of a attachment means, such as a sealable fastener 40, as shown in Figs. 17 and 18. The fastener 40 may be formed, for example, from a pair of sealable tapes 41, 42, as shown in Fig. 19. Each tape 41 or 42 includes an inter-engagement element 43 or 44 at one end thereof. Each inter-engagement element is enclosed in the end portion of the corresponding tape. The tapes 41, 42 is disposed outwardly of the enclosed portion. The fastener also includes a pair of slider guides 46, 47 for guiding a slider 45. One 41 of the tapes is secured to the peripheral wall 7 of the base table 2, and the other 42 of the tapes is secured to the lower edge of the packaging sheet 3.

When packaging an article, the article is mounted on the base table 2, Then, the packaging sheet 3 is wrapped around the article. Next, the fastener 40 provided between the packaging sheet 3 and the base table 2 is closed so as to secure the packaging sheet to the base table 2. The space inside the packaging sheet 3 is evacuated to a pressure below the atmospheric pressure so as to secure the article 1. When depackaging the article, the pressure within the space inside the packaging sheet 3 is returned to the atmospheric pressure. Then, the fastener 40 is opened so as to enable the article to be removed from within the packaging sheet 3.

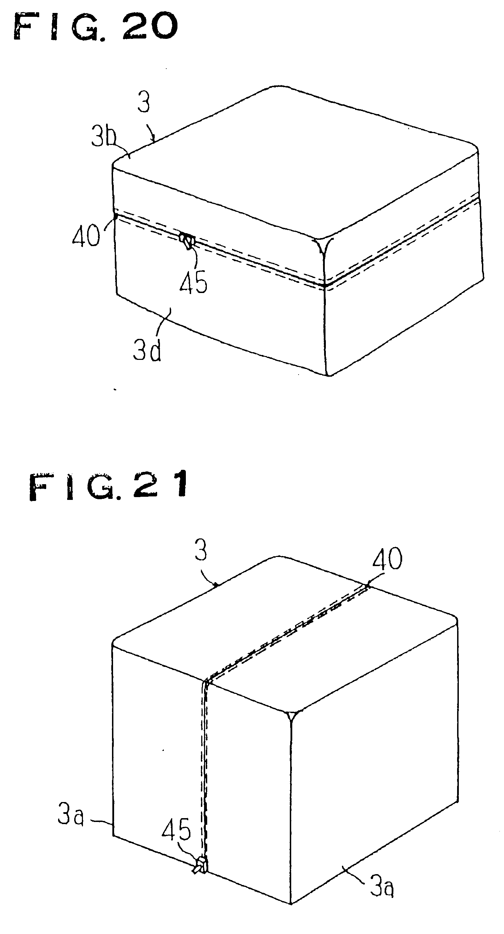

Alternatively, the packaging sheet 3 may be divided at a vertically upper portion thereof into a packaging portion 3b and a base portion 3d, with the fastener 40 being disposed between the packaging portion 3b and the base portion 3d, as shown in Fig. 20 In this case, the base portion 3d of the packaging sheet 3 is initially attached to the peripheral wall 7 of the base table 2. The packaging sheet 3 may also be divided along a vertical plane, with the fastener 40 being extending along the vertical plane, as shown in Fig. 21. In this embodiment, it is also noted that the peripheral edge 3a of the packaging sheet 3 be initially attached to the peripheral wall 7 of the base table 2.

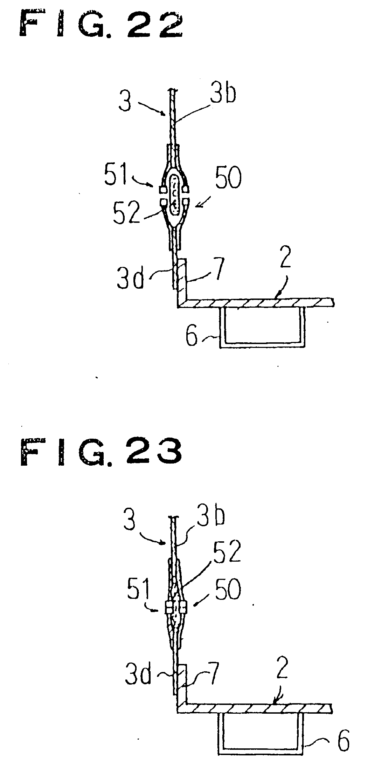

While, in the above embodiments, a highly sealable fastener 40 is used, a first fastener 50 and a second fastener 51 may be attached to the inner surface and outer surface, respectively, defined by the base portion 3d and the packaging portion 3b of the divided packaging sheet, 3 so as to form a duplicated construction, as shown in Figs. 22 and 23 In this case, an intermediate belt 52 having an appropriate thickness and air-tightness or air-tightness, such as a tape of urethane foam, may be provided between the first fastener 50 and the second fastener 51. In this manner, the intermediate belt 52 is sealingly engaged with the first fastener 50 and the second fastener 51 when the first and second fasteners 50, 51 are closed or inter-engaged, so as to maintain air-tightness therebetween. This permits utilization of fasteners having reduced air-tightness which are less expensive, so as to reduce production cost.

It is noted that, although the connection means 4 for communicating with the vacuum source, such as a connection pipe, is not shown if the embodiments shown in Figs. 15 through 23, such means is of course provided. Articles to be packaged by the above packaging device are not limited to any particular shape or type. Singular or plural articles may be packaged within the packaging sheet. An article may be directly mounted on the base table 2, as shown in Fig. 1. Alternatively, an article placed on a pallet may be mounted on the base table 2, as shown in Fig. 11.

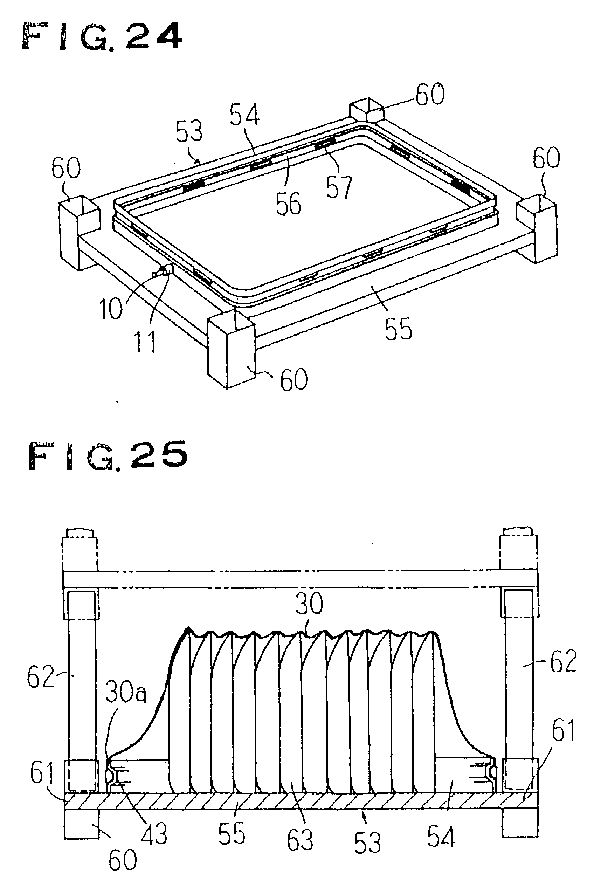

Figs. 24 and 25 illustrate a packaging device according to another embodiment of the invention. In this embodiment, the base table 53 includes four peripheral walls 54, and disposed on a rigid support table 55. Like the above case, the peripheral wall 54 includes a groove 56 extending therearound. A suitable number of suction ports 57 extending through the peripheral wall 54 are formed in the groove 56. The groove is provided with a connection pipe at a suitable position. The connection pipe is in communication with the inside of the peripheral wall 54. The support table 55 is extended outwardly from the circumferential, continuous line defining the outer periphery of the peripheral wall 54. The portion of the upper surface of the support table 55 defined within the peripheral wall serves as an article carrying surface. The support table 55 carries, at each of the four corners, a retainer 60 for receiving a support column. Each retainer 60 for receiving a respective support column is formed with a bottom 61. Accordingly, a plurality of packaging devices may be stacked vertically, using support columns 62 of an appropriate length to be inserted in the retainers 60 for the support columns 62.

In the packaging device shown in Fig. 25, a plurality of panel members 63 are packaged within the packaging sheet 30. In this embodiment, the space within the packaging sheet 30 is also evacuated. By this, the packaging sheet 30 becomes to be tightly fitted over the panel members 63. Accordingly, the panels 63 are prevented from being falling down, and fixedly urged against the base table 53, by means of the atmospheric pressure.

In the thus formed package in which a plurality of panel members 63 are packaged within the packaging sheet 30, it is possible to remove at least one of the panel members 63 from the package, by depackaging the package. Then, the packaging sheet 30 is again placed over the remaining panel members 63, and thereafter the space within the packaging sheet 30 is evacuated. By this, the remaining panel members 63 may be easily and securely packaged within the packaging sheet 30, without displacing or repositioning the remaining panel members 63.

It is possible for the article 1 or panels 63, together with a quantity of gas absorber, to be packaged within the packaging sheet 3 or 30. In such a case, an evacuated condition may be maintained for a long period of time, and thus it is advantageous for a long-term preservation of the article or the like.

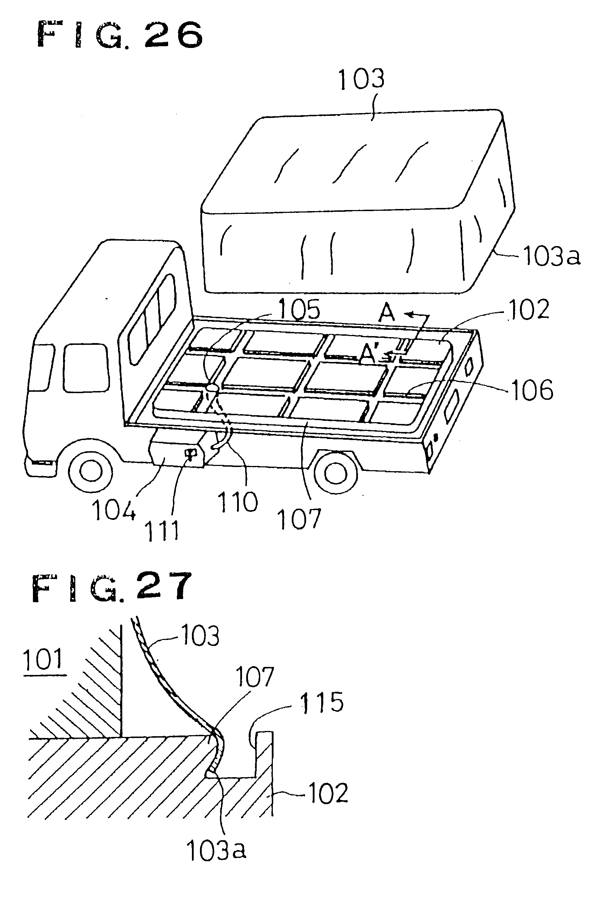

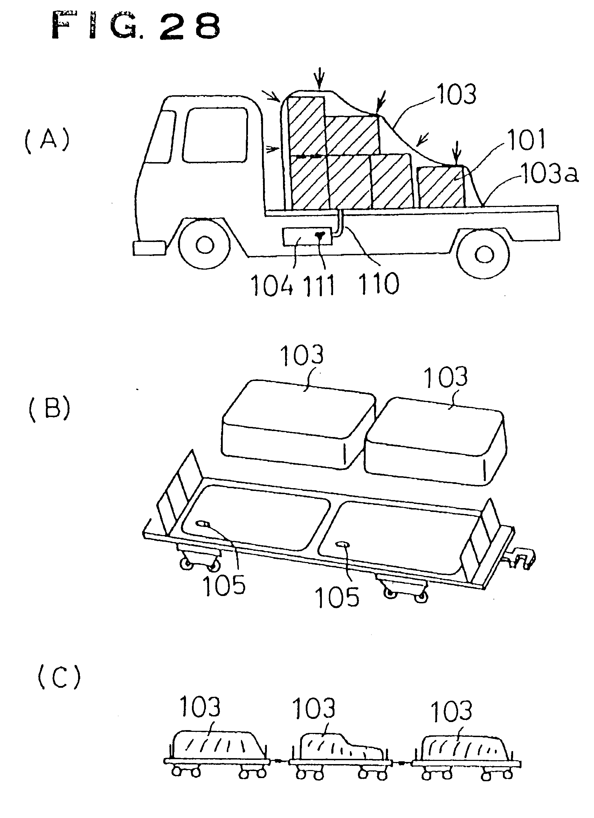

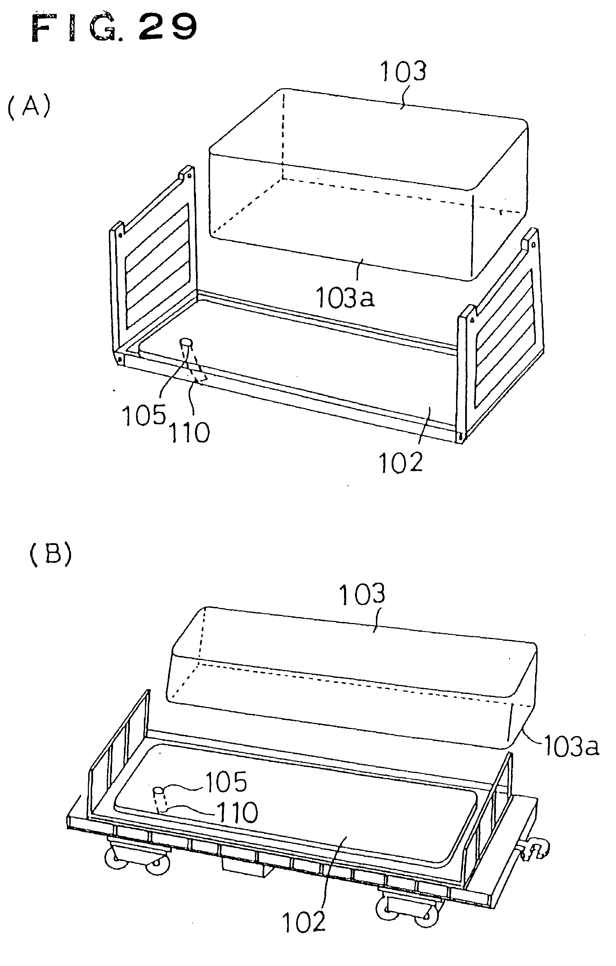

In the aforementioned embodiment, the base table 2 and the carrier of transportation means such as a truck are explained as different things. It is noted, however, that the base table 2 per se may constitute the carrier of the transportation means, according to the invention. Such embodiments will be explained below with reference to Figs. 26 through 31. Figs. 26, 27 and 28(A) show a truck provided with a securement device utilizing the atmospheric pressure, according to one embodiment. Figs. 28(B), 28(C), 29(A) and 29(B) show a rail road carrier provided with a securement device utilizing the atmospheric pressure, according to another embodiment.

The truck provided with the securement device utilizing the atmospheric pressure includes, as shown in Fig. 26, a base table 102 having an upper surface on which a load 101 is to be carried, i.e., a load carrying surface, a packaging sheet 103 to be wrapped around the load 101, and a vacuum source 104 for evacuating the space defined by the packaging sheet 103 and the base table 102 to a pressure below the atmospheric pressure, so as to maintain the evacuated state for a desired period of time.

The base table 102 is formed from a plate the material of which may be metal, wood or synthetic resin. The plate includes a load carrying surface sufficiently broader than the load 101. The plate has a strength sufficient to withstand a weight of the load 101 and the atmospheric pressure. An engagement portion 107 of an annular or rectangular configuration is formed along the periphery of the load carrying surface. The engagement portion 107 is adapted to be engaged with an opening 103a of the packaging sheet 103 in an air-tight manner. A vacuum port 105 is formed in the load carrying surface at a position adjacent to one of the corners thereof. The vacuum port 105 is connected with the vacuum source 104 disposed below the base table 102 through a gage valve 111 and a vacuum passage 110. Preferably, a lattice groove 106 may be formed in the load carrying surface, as shown in the drawing, so as to facilitate fluid communication between the vacuum port 105 and any portion in the load carrying surface. The vacuum source 104 includes, for example, a combination of a vacuum pump and a vacuum tank. The vacuum pump is adapted to be driven by a portion of the output of the truck or a battery. An air injector using a venturi nozzle for producing vacuum may be used as the vacuum source 104.

The packaging sheet 103 is formed from a flexible sheet material having air-tightness and appropriate elasticity. More particularly, such a sheet material includes a plastic sheet, such as a vinyl sheet, a rubber sheet, or fabric material, such as a canvas sheet lined with rubber or having a plastic coating. The packaging sheet 103 has a uniform thickness in its entirety. In this regard, it is noted that a very high strength is not required for the packaging sheet. Thus, a relatively thin packaging sheet may be used, provided that it is capable of withstanding a certain degree of tension while maintaining air-tightness, when exposed to a reduced pressure. The packaging sheet 103 formed from such a sheet material may be formed, for example, into a bag having an opening 103a at one end thereof. The peripheral length of the opening 103a is selected to be slightly smaller than that of the engagement portion 107 of the base table 102, so that the packaging sheet 103 is sealingly fitted over the engagement portion 107 of the base table 102, with the opening 103a being slightly stretched or enlarged.

When the load 101 is mounted on and secured to the truck provided with the securement device, the load 101 is first mounted on the base table 102. Then, the packaging sheet 103 is placed over the load 101. The opening 103a of the packaging sheet 103 is sealingly engaged with the engagement portion 107 of the base table 102. Then, the gate valve 111 is opened so as to actuate the vacuum source 104. By this, the space defined by the base table 102 and the packaging sheet 103 is evacuated to a pressure below the atmospheric pressure. The packaging sheet 103 in its entirety is uniformly pressed inwardly by reason of the pressure difference between the inside of the packaging sheet 103 and the atmospheric pressure. By this, the load 101 is urged against and secured to the base table 102 through the packaging sheet 103. When the load has been secured in place, the gate valve 111 is closed, so as to maintain the evacuated condition within the packaging sheet 103. By this, packaging and securement operation is completed.

The atmospheric pressure acted on the load 101 due to the reduced pressure within the packaging sheet 103 is uniformly applied to the load in every direction, as shown by the arrows in Fig. 28(A). The horizontal components of the atmospheric pressure applied to the load are counter-balanced relative to one another. The vertical components of the atmospheric pressure cause the load 101 and the base table 102 to be urged relative to one another. Thus, the load 101 is strongly urged against the base table 102 to be secured thereto, whereby causing no positional shift of the load.

When the space within the packaging sheet 103 is completely evacuated, a pressure of 1 kgf/square-cm is caused. Thus, a load of increased weight may be securely fixed. It is unnecessary for the space within the packaging sheet 103 to be completely evacuated upon packaging. Accordingly, the degree of vacuum may be suitably adjusted, so as to cause a pressure sufficient to fix the load 101. In particular, when the strength of the load 101 is low, the degree of vacuum is suitably adjusted depending upon a particular strength of the load. In this case, a pressure gauge (not shown) is connected to the vacuum passage 110, so that one may adjust the degree of vacuum while observing the pressure gauge.

When the packaging and securement operation has completed, the truck is started so as to transfer the load 101 to an intended place. In order to de-package the packaged load 101 at the intended place, the gate valve 111 in the vacuum passage 110 is first opened. Thus, the atmospheric pressure is introduced into the space within the packaging sheet 103 through the vacuum passage 110. By this, the securement force applied to the load 101 is released. The opening 103a of the packaging sheet 103 is removed from the engagement portion 107 so as to remove the packaging sheet 103 from the load 101. Then, the load 101 is unloaded from the base table 103. The packaging sheet 103 removed from the load is folded in an appropriate manner and placed on the base table 102 for the purpose of repetitive use.

The vacuum passage 110 may be connected directly to the packaging sheet 103, not to the vacuum port 105 of the base table 103. In this case, the vacuum port 105 should be prevented from contacting the base table 102 and/or the load 101, so as not to obstruct the vacuum effect.

In order to increase the degree of air-tightness between the opening 103a of the packaging sheet 103 and the engagement portion 107, the periphery of the opening 103a may be tightened by a tightening means. Suitable tightening means includes, for example, a strong band having resiliency and elasticity. A metal band may be also used. Preferably, the band is of an endless type. For example, the band is initially fitted into a groove 115 disposed outwardly of the engagement portion 107 of the base table 102. Then, the opening 103a is fitted around the engagement portion 107. Thereafter, the tightening band is tightened.

A rail road carrier provided with a securement device utilizing the atmospheric pressure according to another embodiment will be explained below. Fig. 29(A) shows an embodiment of a container car, and Fig. 29(B) shows an embodiment of an open-car. In these embodiments, a engagement portion 107 is also formed around the base table 102 having an upper, load carrying surface. A freight car is typically mounted with a pressure tank for braking operation. Thus, negative pressure or vacuum pressure may be easily obtained by using compressed air from the pressure tank and a venturi nozzle. Accordingly, appropriate vacuum pressure may be obtained by connecting a throat portion of a venturi device of a simple construction to the vacuum port 105 through the vacuum passage 110, without providing an additional vacuum source such as a vacuum pump. A plurality of load carrying surfaces may be provided on the base table 102 of the freight car, as shown in Fig. 28(B). Each load carrying surface is formed with a vacuum port 105. Each load mounted on the corresponding load carrying surface may be covered by a separate packaging sheet 103. Even when the loads mounted on the respective freight cars have a different volume, each packaging sheet 103 may be appropriately fitted over a respective load depending upon the volume and/or shape of the particular load. Thus, a single kind of packaging sheet 103 may be prepared.

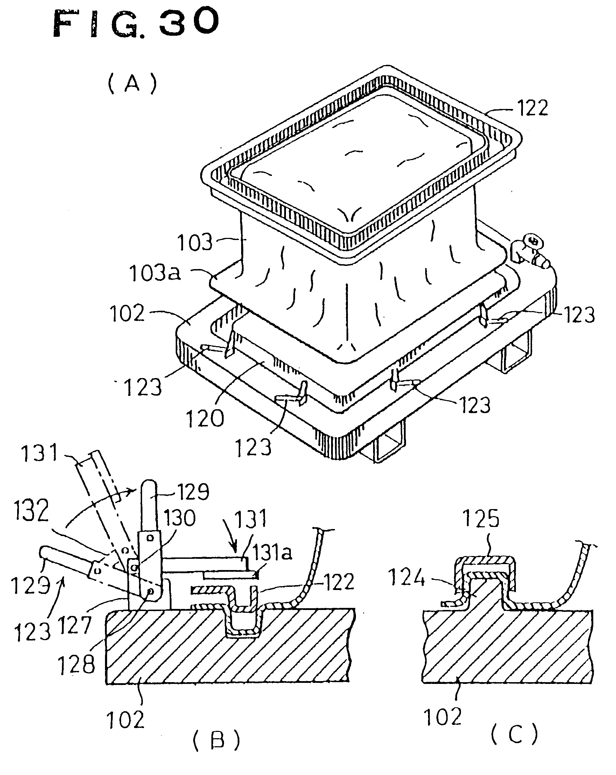

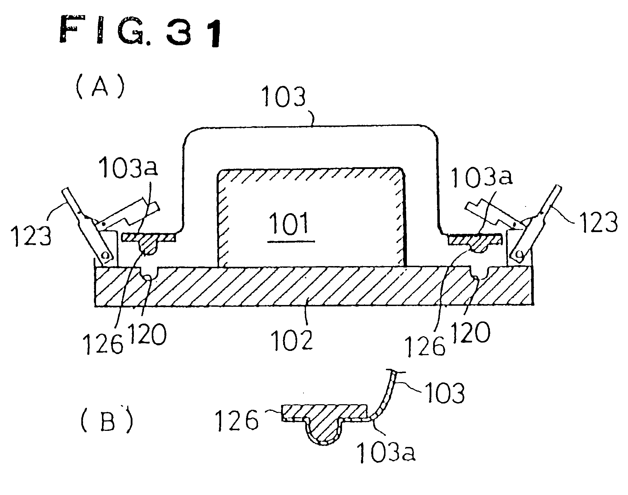

In the above embodiments, the opening 103a of the packaging sheet 103 is adapted to be engaged with the engagement portion 107. It is noted, however, that the open end 103a may be more securely attached to a base table 102 in an airtight manner in the following preferable procedure. The open end 103a of the packaging sheet 103 is placed over an annular groove 120 formed in the load carrying surface along its periphery in the upper surface of the base table 102, as shown in Fig. 30(A). A presser ring 122 is placed around the open end 103a of the packaging sheet 103. The presser ring 122 is of an annular configuration (rectangular in the illustrated embodiment) corresponding to the circumferential configuration of the groove 120. The presser ring 122 is adapted to be resiliently fitted in the groove 120. The presser ring 122 is urged downwardly, by its upper surface, by a plurality of clams 123 disposed substantially equidistantly along the periphery of the groove 120. By this, the peripheral portion around the open end 103a of the packaging sheet 103, together with the presser ring 122, is pressingly fitted in the groove 120. In this connection, it is possible to form an annular protrusion 124 shown in Fig. 30(C), instead of the groove 120, along the periphery of the load carrying surface in the upper surface of the base table 102. In this case, a rectangular presser ring 125 is used in place of the above presser ring 122. The rectangular presser ring 125 has a cross-section of an inverted, substantially U-shaped configuration and is adapted to be resiliently fitted over the annular protrusion 124. In the above embodiment, the presser ring 122 or 125 is formed independently of the packaging sheet 103. It is noted, however, that a presser ring 126 adapted to be resiliently fitted in the groove 120 may be formed integrally with the open end 103a of the packaging sheet 103 in its inner surface, as shown in Fig. 31(A), or formed integrally with the open end 103a of the packaging sheet 103 in its outer surface, as shown in Fig. 31(B). Preferably, the presser rings 122, 125 and 126 are formed from a material, such as steel, having an appropriate stiffness and toughness, which is capable of transmitting each pressure action, exerted by the plurality of clamps 123 over a predetermined length, to the open end 103a. A packing or sealing material may be placed between the base table 102, the open end 103a of the packaging sheet and the presser ring 122, 125 or 126, as desired, so as to increase air-tightness.

The clamp 123 includes, as shown in Fig. 30(B), a first lever 129 pivotable about a pin 128 of a bracket 127 fixed to the base table 102, a second lever 131 pivotable about a pin 130, and a link plate 132 connecting the first lever 129 and the second lever 131 at their intermediate portions for pivotable movement. When the first lever 129 is raised in the direction of the arrow mark, the second lever 131 is urged by the link plate 132 into a horizontal position. Thus, a pressure portion 131a at the forward end of the second lever 131 applies a pressure on the presser ring 122, 125 or 126.

The invention has been explained in the above with reference to the preferred embodiments. The invention may be applicable, other than a truck or a railroad freight car, to substantially all transportation means, such as a small or medium sized marine boat having a deck on which a relatively small load is fixedly maintained.

In accordance with the invention, an article is packaged utilizing the atmospheric pressure. Thus, no additional means for fixedly maintaining or binding the article is not required in substance. The number of parts constituting the packaging device is minimized. The weight of the packaging device may be substantially reduced, as compared with prior art packaging device. Packaging operation may be conducted in simple and quick manner, by placing a packaging sheet on an article, so as to place peripheral edge of the packaging sheet sealingly attached to the base table, thereafter evacuating a space within the packaging sheet by means of a vacuum pump. Depackaging operation may be also conducted in a very simple manner, by opening vacuum connection means, so as to introduce the atmospheric pressure into the space within the packaging sheet.

The packaging sheet covers the article completely in an airtight manner. This contributes to improvement in moisture-proofing and dust-proofing property of the package. The space in which the article is accommodated is substantially evacuated. Thus, the space is maintained in oxygen-poor condition, so that an ideal environment is maintained for the purpose of restricting metal articles from rusting. The packaged article is uniformly acted on by the atmospheric pressure, so that a plurality of articles, rather than a single article, may be packaged at the same time. It is unnecessary for each article to be bound. Accordingly, the article would not be damaged at a limited area, as in the case of prior art using binding means, so that superior fixation function may be obtained.

When a plurality of articles are packaged, a particular article may be removed from the package, by releasing the packaging sheet. The packaging sheet may be placed again on the remaining articles. The space within the packaging sheet is then evacuated, so that the remaining articles may be packaged again. Specifically, any desired article or articles may be removed from the package without depackaging it in its entirety, and the remaining articles may be simply packaged again by placing the packaging sheet on the remaining articles and evacuating the space within the packaging sheet.

In a packaging device including a base table of a hollow construction, or a base table constructed with a bottom wall and a peripheral wall, the weight may be reduced significantly. With the base table formed with suction ports, the peripheral edge of the packaging sheet is sealingly sucked to the base table, so that stable evacuation may be conducted during packaging.

It is also possible to use a packaging sheet having a peripheral edge of an increased thickness, or a packaging sheet having binding means on the outer periphery thereof. Such packaging sheets increase air-tightness between the packaging sheet and the base table, as well as stability in evacuation during packaging operation. When the packaging sheet is adhesively attached to the base table, it is possible for the packaging sheet to be bonded to or removed from the base table upon packaging or depackaging, so that increased workability or working property may be achieved.

## Claims

1. Method for reliable transport packaging of an article (1) utilizing atmospheric pressure, comprising the steps of
placing an article (1) on a base plate (2); and
putting a packaging sheet (3) on said article (1), said packaging sheet (3) having flexibility and air-tightness;
reducing the pressure in the space enclosed with said base plate (2) and said packaging sheet (3) to a pressure below the atmospheric pressure; and
permitting the atmospheric pressure to be acted on said article (1) through said packaging sheet (3);
whereby said article (1) is fixedly urged against said base table (2) by the action of the atmospheric pressure;
characterized by
sealingly attaching the peripheral edge (3a) of said packaging sheet (3) to the peripheral wall (7) of said base plate (2) before reducing pressure.

2. Method according to claim 1, wherein said base plate is a base table (20) of a hollow construction including said peripheral walls (21), a bottom wall (22) having no apertures, and an upper wall (23) having a suction port (28) therein; and evacuating the inside of said base table (20).

3. Device for reliable transport packaging of an article utilizing atmospheric pressure, comprising a base table (2) having a surface for carrying the article (1) and a packaging sheet (3) having flexibility and air-tightness for packaging therein said article (1) on said base table (2) and for being fixed to said base table (2) in an airtight manner;
characterized in that the base table (2) has a thickness for enabling a peripheral edge (3a) of the packaging sheet (3) to be closely adhered thereon.

4. Device according to claim 3, characterized by
the base table (20) of a hollow construction including peripheral walls (21), a bottom wall (22) having no apertures, and an upper wall (23) having a suction port (28); and
means (12) for withdrawing air from the inside of said base table (2) and through said suction port (28) formed in the upper wall (23) of said base table (20).

5. Packaging device according to claim 3, characterized in that said base table (2) includes a bottom wall (13) and a peripheral wall (7) upstanding from said bottom wall (13).

6. Packaging device according to claim 3, characterized in that said peripheral wall (7) of said base table is formed with a groove (15) extending around said peripheral wall (7) in its entirety, said groove (15) being formed by recessing a portion of said peripheral wall.

7. Packaging device according to claim 3, characterized in that said base table (53) includes a peripheral wall (7) and a solid support table (55) extending outwardly from said peripheral wall, said support table (55) having, at each of its four corners, an upstanding retainer (60) for receiving a support column (62), each of said retainer (60) receiving said support column (62) inserted therein, whereby said support table (55) having said article mounted thereon may be stacked in a vertical direction.

8. Packaging device according to claim 3 or 4, characterized in that said peripheral wall of said base table (2) is formed with suction ports (28) for sucking said peripheral edge of said packaging sheet thereto.

9. Packaging device according to claim 8, characterized in that said suction ports (28) in said peripheral wall (7) of said base table (2) are formed in a groove (15) which is formed by recessing a portion of said peripheral wall (7).

10. Packaging device according to claim 3 or 4, characterized in that said packaging sheet (3, 30) has a uniform thickness in the area from its central portion to the peripheral edge (3a, 30a).

11. Packaging device according to claim 3 or 4, characterized in that said packaging sheet (30) has a peripheral edge (30c) of an increased thickness.

12. Packaging device according to claim 3 or 4, characterized by tightening means (31) adapted to be placed around the peripheral edge of said packaging sheet (3, 30).

13. Packaging device according to claim 3 or 4, characterized in that the peripheral edge of said packaging sheet (3) is attached to the peripheral wall of said base table (2) through separable bonding means having air-tightness.

14. Packaging device according to claim 3 or 4, characterized in that said packaging sheet (3) is divided into at least two portions (3a, 3b, 3d), said at least two portions being connected together by means of airtight bonding means.

15. Packaging device according to claim 14, characterized by tightening means (14, 31) having a cross-section corresponding to the cross-sectional configuration of said groove (15) formed in said peripheral wall of said base table (2), wherein said tightening means (14, 31) is placed on the peripheral edge of said packaging sheet (3).

16. Packaging device according to claim 6, characterized in that said packaging sheet (3, 30) is formed with an edge of an increased thickness having a cross-sectional configuration corresponding to that of said groove (15) formed in said peripheral wall (7) of said base table, and that said edge of an increased thickness is sealingly engaged with said peripheral wall of said base table (2).

17. Packaging device according to claim 13 or 14, characterized in that said bonding means include a first fastener (50) and a second fastener (51) attached to said packaging sheet, and an intermediate belt (52) disposed between said first fastener (50) and said second fastener (51), said intermediate belt (52) having airtightness and appropriate thickness.

18. Transportation means provided with a device for fixedly maintaining an article utilizing atmospheric pressure, comprising:
a surface for carrying an article (1) thereon;
an airtight engagement portion of an annular configuration formed in the periphery of said surface for carrying an article (1);
a resilient and airtight packaging sheet (3, 30) of a sack-like configuration adapted to be placed on said article carried on said surface for carrying an article (1), said packaging sheet (3, 30) having, at one end thereof, an open end removably engageable with said airtight engagement portion in an airtight manner, and
a vacuum passage having a first end in communication with the interior of said packaging sheet and a second end connected with a vacuum source (12).

## Patentansprüche

1. Verfahren für die zuverlässige Verpackung eines Gegenstands (1) für den Transport unter Anwendung von Atmosphärendruck, bei dem
ein Gegenstand (1) auf eine Grundplatte (2) gelegt wird; und eine Verpackungsfolie (3) auf den Gegenstand (1) gelegt wird, wobei die Verpackungsfolie flexibel und luftdicht ist;
bei dem der Druck in dem Raum, der durch die Grundplatte (2) und die Verpackungsfolie (3) eingeschlossen ist, auf einen Wert unterhalb des Atmosphärendrucks gesenkt wird; und der Atmosphärendruck durch die Verpackungsfolie auf den Gegenstand (1) wirken kann;
wodurch der Gegenstand (1) durch die Wirkung des Atmosphärendrucks fest gegen die Grundplatte (2) gedrückt wird; dadurch gekennzeichnet, dass
die Umfangskante (3a) der Verpackungsfolie (3) vor dem Senken des Drucks an der Außenwandung (7) der Grundplatte (2) dicht befestigt wird.

2. Verfahren nach Anspruch 1, bei dem die Grundplatte ein hohler Tisch (20) ist, der die Außenwände (21), eine untere Wand (22) ohne Öffnungen und eine obere Wand (23) mit einer darin befindlichen Saugöffnung (28) aufweist, wobei das Innere des Tisches (20) evakuiert wird.

3. Vorrichtung für die zuverlässige Verpackung eines Gegenstands für den Transport unter Anwendung von Atmosphärendruck, mit einem Tisch (2), der eine Oberfläche zum Tragen des Gegenstands (1) aufweist, und einer Verpackungsfolie (3), die flexibel und luftdicht ist, um den Gegenstand (1) auf dem Tisch (2) darin zu verpacken, und um den Gegenstand luftdicht auf dem Tisch (2) zu befestigen;
dadurch gekennzeichnet, dass der Tisch (2) eine Dicke hat, die es ermöglicht, dass eine Umfangskante (3a) der Verpackungsfolie (3) eng daran haften kann.

4. Vorrichtung nach Anspruch 3, gekennzeichnet durch
den hohlen Tisch (20) mit Außenwänden (21), einer unteren Wand (22) ohne Öffnungen und einer oberen Wand (23) mit einer Saugöffnung (28); und durch Mittel (12) zum Absaugen von Luft aus dem Inneren des Tisches (2) und durch die in der oberen Wand (23) des Tisches (20) ausgebildete Saugöffnung (28).

5. Verpackungsvorrichtung nach Anspruch 3, dadurch gekennzeichnet, dass der Tisch (2) eine untere Wand (13) und eine sich von der unteren Wand (13) erhebende Außenwandung (7) aufweist.

6. Verpackungsvorrichtung nach Anspruch 3, dadurch gekennzeichnet, dass die Außenwandung (7) des Tisches eine Nut (15) aufweist, die sich um die gesamte Außenwandung (7) herum erstreckt, wobei die Nut (15) durch Aussparen eines Bereichs der Außenwandung gebildet wird.

7. Verpackungsvorrichtung nach Anspruch 3, dadurch gekennzeichnet, dass der Tisch (53) eine Außenwandung (7) und eine feste Trägerplatte (55) aufweist, die sich von der Außenwandung nach außen erstreckt, wobei die Trägerplatte (55) an jeder ihrer vier Ecken einen sich erhebenden Halter zur Aufnahme einer Stützsäule (62) aufweist, wobei jeder der Halter (60) die darin eingesetzte Stützsäule (62) aufnimmt, so dass die Trägerplatte (55) mit dem darauf befestigten Gegenstand vertikal gestapelt werden kann.

8. Verpackungsvorrichtung nach Anspruch 3 oder 4, dadurch gekennzeichnet, dass die Außenwandung des Tisches (2) Saugöffnungen (28) aufweist, um die Umfangskante der Verpackungsfolie an die Außenwandung zu saugen.

9. Verpackungsvorrichtung nach Anspruch 8, dadurch gekennzeichnet, dass die Saugöffnungen (28) in der Außenwandung (7) des Tisches (2) in einer Nut (15) ausgebildet sind, die durch Aussparen eines Bereichs der Außenwandung (7) gebildet wird.

10. Verpackungsvorrichtung nach Anspruch 3 oder 4, dadurch gekennzeichnet, dass die Verpackungsfolie (3, 30) in dem Bereich von ihrem mittigen Bereich bis hin zur Umfangskante (3a, 30a) eine gleichmäßige Dicke hat.

11. Verpackungsvorrichtung nach Anspruch 3 oder 4, dadurch gekennzeichnet, dass die Verpackungsfolie (30) eine Umfangskante (30c) mit erhöhter Dicke aufweist.

12. Verpackungsvorrichtung nach Anspruch 3 oder 4, gekennzeichnet durch Spannmittel (31), die um die Umfangskante der Verpackungsfolie (3, 30) herum anzuordnen sind.

13. Verpackungsvorrichtung nach Anspruch 3 oder 4, dadurch gekennzeichnet, dass die Umfangskante der Verpackungsfolie (3) an der Außenwandung des Tisches (2) durch abnehmbare, luftdichte Verbindungsmittel befestigt wird.

14. Verpackungsvorrichtung nach Anspruch 3 oder 4, dadurch gekennzeichnet, dass die Verpackungsfolie (3) in mindestens zwei Bereiche (3a, 3b, 3d) aufgeteilt ist, wobei die mindestens zwei Bereiche durch luftdichte Verbindungsmittel miteinander verbunden werden.

15. Verpackungsvorrichtung nach Anspruch 14, gekennzeichnet durch Spannmittel (14, 31) mit einem Querschnitt, der der Querschnittsform der Nut (15) entspricht, die in der Außenwandung des Tisches (2) ausgebildet ist, wobei das Spannmittel (14, 31) auf der Umfangskante der Verpackungsfolie (3) angeordnet wird.

16. Verpackungsvorrichtung nach Anspruch 6, dadurch gekennzeichnet, dass die Verpackungsfolie (3, 30) eine Kante mit größerer Dicke aufweist, die eine Querschnittsform besitzt, welche der Querschnittsform der in der Außenwandung (7) des Tisches ausgebildeten Nut (15) entspricht, und dass die Kante mit größerer Dicke mit der Außenwandung des Tisches (2) dicht in Eingriff gebracht wird.

17. Verpackungsvorrichtung nach Anspruch 13 oder 14, dadurch gekennzeichnet, dass die Verbindungsmittel aus einem ersten Befestigungselement (50) und einem zweiten, an der Verpackungsfolie angebrachten Befestigungselement (51) sowie einem zwischen dem ersten Befestigungselement (50) und dem zweiten Befestigungselement (51) angeordneten Zwischengürtel (52) bestehen, wobei der Zwischengürtel (52) luftdicht ist und eine geeignete Dicke hat.

18. Transportmittel mit einer Vorrichtung zum festen Halten eines Gegenstands mittels Atmosphärendruck, bestehend aus:
einer Oberfläche zum Tragen eines Gegenstandes (1);
einemluftdichten, ringförmig ausgebildeten Eingriffsbereich, der im Umfang der Oberfläche zum Tragen eines Gegenstands (1) ausgebildet ist;
einer elastischen und luftdichten Verpackungsfolie (3, 30), die sackförmig ausgebildet und auf den auf der Oberfläche zum Tragen eines Gegenstands (1) ruhenden Gegenstand zu legen ist, wobei die Verpackungsfolie (3, 30) an einem Ende ein offenes Ende hat, das lösbar mit dem luftdichten Eingriffsbereich luftdicht in Eingriff zu bringen ist, und
einer Vakuumleitung, die ein erstes Ende aufweist, das mit dem Inneren der Verpackungsfolie in Verbindung steht, und ein zweites Ende, das mit einer Vakuumquelle (12) verbunden ist.

## Revendications

1. Procédé de conditionnement fiable pour le transport d'un article (1) par mise en oeuvre de la pression atmosphérique, comprenant les étapes suivantes :
la disposition d'un article (1) sur une plaque de base (2), et
la disposition d'une feuille d'emballage (3) sur l'article (1), la feuille d'emballage (3) ayant des propriétés de souplesse et d'herméticité à l'air,
la réduction de pression dans l'espace enfermé entre la plaque de base (2) et la feuille d'emballage (3) à une pression inférieure à la pression atmosphérique, et
l'action naturelle de la pression atmosphérique sur l'article (1) par l'intermédiaire de la feuille d'emballage (3),
si bien que l'article (1) est repoussé en position fixe contre la plaque de base (2) par l'action de la pression atmosphérique,
caractérisé par la fixation étanche du bord périphérique (3a) de la feuille d'emballage (3) à la paroi périphérique (7) de la plaque de base (2) avant la réduction de la pression.

2. Procédé selon la revendication 1, dans lequel la plaque de base est une table de base (20) de construction creuse qui comprend les parois périphériques (21), une paroi inférieure (22) sans orifice, et une paroi supérieure (23) ayant un canal d'aspiration (28), et le procédé comprend l'évacuation de l'intérieur de la table de base (20).

3. Appareil de conditionnement fiable d'un article pour son transport, utilisant la pression atmosphérique, comprenant une table de base (2) ayant une surface de support de l'article (1) et une feuille d'emballage (3) ayant des propriétés de souplesse et d'herméticité à l'air, destiné au conditionnement de l'article (1) sur la table de base (2) et à être fixée à la plaque de base (2) de manière hermétique à l'air, caractérisé en ce que la table de base (2) a une épaisseur telle qu'elle permet à un bord périphérique (3a) de la feuille d'emballage (3) d'adhérer intimement à la table.

4. Appareil selon la revendication 3, caractérisé en ce que :
la table de base (20) a une construction creuse et comporte des parois périphérique (21), une paroi inférieure (22) sans orifice, une paroi supérieure (23) ayant un canal d'aspiration (28), et
un dispositif (12) d'extraction d'air de l'intérieur de la table de base (2) et par le canal d'aspiration (28) formé dans la paroi supérieure (23) de la table de base (20).

5. Appareil de conditionnement selon la revendication 3, caractérisé en ce que la table de base (2) comporte une paroi inférieure (13) et une paroi périphérique (7) dépassant de la paroi inférieure (13) vers le haut.

6. Appareil de conditionnement selon la revendication 3, caractérisé en ce que la paroi périphérique (7) de la table de base est réalisée avec une gorge (15) qui s'étend autour de la paroi périphérique (7) dans sa totalité, la gorge (15) étant formée par mise en retrait d'une partie de la paroi périphérique.

7. Appareil de conditionnement selon la revendication 3, caractérisé en ce que la table de base (53) possède une paroi périphérique (7) et une table solide de support (55) dépassant à l'extérieur de la paroi périphérique, la table de support (55) ayant, à chacun de ses quatre coins, un organe (60) de retenue dépassant vers le haut destiné à loger une colonne de support (62), chaque organe de retenue (60) logeant la colonne de support (62) introduite dans l'organe, si bien que la table de support (55) sur laquelle est monté l'article peut être empilée en direction verticale.

8. Appareil de conditionnement selon la revendication 3 ou 4, caractérisé en ce que la paroi périphérique de la table de base (2) est formée avec des canaux d'aspiration (28) permettant l'aspiration du bord périphérique de la feuille d'emballage vers elle.

9. Appareil de conditionnement selon la revendication 8, caractérisé en ce que les canaux d'aspiration (28) formés dans la paroi périphérique (7) de la table de base (2) sont formés dans une gorge (15) qui est réalisée par mise en retrait d'une partie de la paroi périphérique (7).

10. Appareil de conditionnement selon la revendication 3 ou 4, caractérisé en ce que la feuille d'emballage (3, 30) a une épaisseur uniforme dans la région comprise entre sa partie centrale et le bord périphérique (3a, 30a).

11. Appareil de conditionnement selon la revendication 3 ou 4, caractérisé en ce que la feuille d'emballage (30) a un bord périphérique (30c) d'épaisseur accrue.

12. Appareil de conditionnement selon la revendication 3 ou 4, caractérisé par un dispositif de serrage (31) destiné à être placé autour du bord périphérique de la feuille d'emballage (3, 30).

13. Appareil de conditionnement selon la revendication 3 ou 4, caractérisé en ce que le bord périphérique de la feuille d'emballage (3) est fixé à la paroi périphérique de la table de base (2) par un dispositif séparable de liaison ayant des propriétés d'herméticité à l'air.

14. Appareil de conditionnement selon la revendication 3 ou 4, caractérisé en ce que la feuille d'emballage (3) est divisée en au moins deux parties (3a, 3b, 3d), les deux parties au moins étant raccordées mutuellement par un dispositif de liaison hermétique à l'air.

15. Appareil de conditionnement selon la revendication 14, caractérisé par un dispositif de serrage (14, 31) ayant une section qui correspond à la configuration en coupe de la gorge (15) formée dans la paroi périphérique de la table de base (2), et le dispositif de serrage (14, 31) est placé sur le bord périphérique de la feuille d'emballage (3).

16. Appareil de conditionnement selon la revendication 6, caractérisé en ce que la feuille d'emballage (3, 30) est formée avec un bord d'épaisseur accrue ayant une configuration en coupe qui correspond à celle de la gorge (15) formée dans la paroi périphérique (7) de la table de base, et en ce que le bord d'épaisseur accrue coopère de façon étanche avec la paroi périphérique de la table de base (2).

17. Appareil de conditionnement selon la revendication 13 ou 14, caractérisé en ce que le dispositif de liaison comprend un premier organe de fixation (50) et un second organe de fixation (51) fixés à la feuille d'emballage, et une sangle intermédiaire (52) placée entre le premier organe (50) et le second organe (51) de fixation, la sangle intermédiaire (52) ayant l'herméticité et l'épaisseur convenables.

18. Dispositif de transport muni d'un appareil de maintien en position fixe d'un article par mise en oeuvre de la pression atmosphérique, comprenant :
une surface de support d'un article (1), une partie de coopération hermétique à l'air de configuration annulaire formée à la périphérie de la surface de support d'un article (1),
une feuille élastique et hermétique à l'air d'emballage (3, 30) ayant la configuration d'un sac et destinée à être placée sur l'article porté par la surface de support d'article (1), la feuille d'emballage (3, 30) ayant, à une première extrémité, une extrémité ouverte qui peut coopérer temporairement avec la partie de coopération hermétique à l'air de manière hermétique, et
un passage de vide ayant une première extrémité qui communique avec l'intérieur de la feuille d'emballage et une seconde extrémité raccordée à une source de vide (12).
